# EUROPEAN PATENT SPECIFICATION

(11) **EP 3 634 772 B1**
(45) Date of publication and mention of the grant of the patent: **03.08.2022**
(21) Application number: 18732246.6
(22) Date of filing: 07.06.2018
(51) Int. Cl.: G06K 7/12, G07F 7/06, B42D 25/382

(54) **A RECYCLABLE CONTAINER COMPRISING A SECURITY MARK AND A METHOD FOR VALIDATING ITS AUTHENTICITY**
EIN WIEDERVERWERTBARER BEHÄLTER MIT EINEM SICHERHEITSMERKMAL UND EIN VERFAHREN ZUR ÜBERPRÜFUNG SEINER ECHTHEIT
UN CONTENEUR RECYCLABLE COMPRENANT UNE MARQUE DE SÉCURITÉ ET UN PROCÉDÉ POUR VALIDER SON AUTHENTICITÉ

(30) Priority: 07.06.2017 DK PA201770444
(43) Date of publication of application: 15.04.2020
(73) Proprietor: Dansk Retursystem A/S, 2640 Hedehusene (DK)
(72) Inventor: HENRIKSEN, Per, 3660 Stenlose (DK)
(74) Representative: Patentgruppen A/S
(86) International application number: PCT/DK2018/050126
(87) International publication number: WO 2018/224108

(56) References cited:
- WO-A1-03/032243
- WO-A1-2016/167298
- WO-A2-03/081522
- CN-A- 101 003 241
- CN-B- 103 895 379
- DE-A1-102006 011 143
- US-A1- 2011 298 204

## Description

### Field of the invention

The invention relates to a recyclable container, comprising a security mark, wherein the security mark comprises an illustration including a first part printed in a first ink and second part printed in a second ink. The invention further relates to a method for validating the authenticity of recyclable container comprising a security mark.

### Background of the invention

Recyclable containers such as bottles, cans, bags, boxes or other may be provided with security marks for facilitating automated authentication of recyclable containers before refunding a deposit to a person which returns a container to a collection system.

Such collection systems for receiving recyclable containers from users may be provided with a detection system for performing automated authentication of recyclable containers.

Examples of conventional security marks including different components visible or invisible under different illumination conditions are provided in US 2011/298204 A1, for instance. The document WO 2016/167298 A1 discloses a forgery prevention ink whereby an infrared absorption profile for a printed matter in the infrared wavelength region can be arbitrarily set.

DK 176675B1 and DE 102006011143 A1 disclose a security mark containing an illustration composed of two different colour elements so that the entire illustration is visible for the human eye in normal light and so that only a part of the illustration is invisible for the human eye when the security mark is illuminated with infrared light. The security marks disclosed in DK 176675B1 and DE 102006011143 A1 may be authenticated based on detecting one of the two colour elements by illuminating with the normal light and with the infrared light.

It may be a disadvantage that authentication in DK 176675B1 and DE 102006011143 A1 requires image analysis for detecting one of the two colour elements. Here there may be another disadvantage that the security mark may be copied in a tampered security mark by using a similar illustration and colour elements.

Accordingly, there is need for improving recyclable containers provided with security marks and systems for authenticating them in order to address these problems.

### Summary of the invention

The invention provides for a recyclable container comprising a security mark wherein the security mark comprises an illustration including a first part printed in a first ink and second part printed in a second ink. The reflectance of the first part is between 0 and 20 percent in the visible spectrum having a wavelength up to 660 nm, making the first part substantially fully visible in most of the visible spectrum and the reflectance of the first part is above 80 percent in infrared light having a wavelength above 800 nm making the first part substantially invisible in most of the infrared spectrum. The reflectance of the second part is between 0 and 20 percent in light having a wavelength up to 800 nm making the second part substantially fully visible in the visible spectrum and a first part of the infrared spectrum up to 800 nm and the reflectance of the second part is above 25 percent in infrared light having a wavelength above 960 nm making the second part at least not fully visible in most of the infrared spectrum.

Advantageously, by specifying the reflectance of parts of the security mark to be within certain ranges, the authenticity may be checked based on measurements of reflectance values, e.g. as an alternative to determining a shape or locations of a specific colour element of the security mark. Specifically, by having a reflectivity above 25 percent in infrared light for a part of the illustration and possibly below 80 percent, this part is neither visible nor invisible and, therefore, provide unique characteristics to the security mark.

Furthermore, due to the specific reflectance values it is more difficult to produce tampered security marks.

Even though authentication of the security mark is based on reflection values, the security mark may still be authenticated according to the method disclosed in DK 176675B1 since the security mark according to the first aspect is also composed of two colour elements where both elements are visible in normal light and one is invisible for the human eye when the security mark is illuminated with infrared light. This is advantageous in that the validity of the security mark according to the present invention hereby can be detected in both existing reverse vending machine and in new reverse vending machines comprising means for validating the authenticity of the more complex security mark according to the present invention enabling that that a security mark according to the present invention can be slowly introduced to the market in that it will be read correctly in both existing reverse vending machines and new reverse vending machines designed to also detect reflectance values at specific wavelengths.

According to an embodiment the reflectance of the second part is below 80 percent in infrared light making the second part at least partly visible in the infrared spectrum. By having a reflectance below 80 percent, e.g. above 35 percent, in a range in infrared light, the second part may not be fully visible, but at least partly visible.

In an aspect of the invention, the security mark is formed on a label attached to the recyclable container.

Providing the security mark on a label may be advantageous for printing illustrations with two different inks. Additionally, the security mark, when formed on a label, can be provided on containers which cannot be printed on for forming a security mark.

In an aspect of the invention, the security mark is printed directly on the recyclable container. Printing the security mark on the container may advantageously make it more difficult to produced tampered security mark prints.

In an aspect of the invention, the reflectance of the second part is between 0 and 20 percent in light having a wavelength up to 880 nm.

By having a relatively low reflectance up to 880 nm, the range of visibility in infrared light is extended.

In an aspect of the invention, the reflectance of the second part is above 35 percent in light having a wavelength above 940 nm. By having a reflectance above 35 percent, the second part is still visible above 940 nm, but with decreased visibility.

In an aspect of the invention, the reflectance of the second part is below 80 percent in infrared light, making the second part at least partly visible in the infrared spectrum. By having a reflectance below 80 percent, e.g. above 35 percent, in a range in infrared light, the second part may not be fully visible, but at least partly visible. Furthermore, the invention provides for a method for validating the authenticity of a recyclable container having a security mark. The method comprises the steps of:
- capturing one or more images of the recyclable container,
- analysing the one or more images to identify at least a part of a first part of the security mark and at least a part of a second part of the security mark,
- illuminating the security mark with light within the visible spectrum,
- detecting first reflectance values of the at least a part of the first part and the at least a part of the second part when the security mark is illuminated with light within the visible range,
- illuminating the security mark with infrared light having a wavelength up to 900 nm,
- detecting second reflectance values of the at least a part of the first part and the at least a part of the second part when the security mark is illuminated with infrared light having a wavelength up to 900 nm,
- illuminating the security mark with infrared light having a wavelength above 900 nm,
- detecting third reflectance values of the at least a part of the first part and the at least a part of the second part when the security mark is illuminated with infrared light having a wavelength above 900 nm,
- validating the authenticity of the security mark by checking if the first reflectance values, the second reflectance values and the third reflectance values are within predefined ranges.

Detecting reflectance values at three different wavelength ranges and then validating the authenticity of the security mark by checking if these reflectance values are within predefined ranges enables a more complex validation procedure that at the same time is fast - since only reflections values are compared. Thus, the present method enables a safer and more fraud-proof method for validating the authenticity of a security mark.

In an aspect of the invention, the reflectance values are established by detecting a grey-scale value.

It is advantageous if pixel values of the identified part of the security mark may be in the form of grey-scale values corresponding to a captured light energy in the this will reduce the amount of data and increase processing speed. The grey-scale values may be obtained from a grey-scale or a colour image sensor.

In an aspect of the invention, the one or more images of the recyclable container is taken by one or more security mark detection means while the recyclable container is moved past the one or more security mark detection means.

Moving the recyclable containers past the one or more security mark detection means is simpler than the other way around and it enables a fast and efficient detection procedure.

The term *"security mark detection means"* in this context should be interpreted as any kind of detector suited for detecting a security mark, e.g. the graphical appearance, i.e. any device comprising an imaging or non-imaging device including a camera, a light beam scanner, a laser scanner or other optical system capable of capturing reflected light from the security mark or combinations thereof. The device may additionally include light sources for illumination purposes and/or processing circuits for analyzing the captured reflected light.

In an aspect of the invention, the infrared light having a wavelength up to 900 nm and the infrared light having a wavelength above 900 nm are turned off while the first reflectance values are detected, wherein the light within the visible spectrum and the infrared light having a wavelength above 900 nm are turned off while the second reflectance values are detected, and wherein the light within the visible spectrum and the infrared light having a wavelength up to 900 nm are turned off while the third reflectance values are detected.

Advantageously, by sequentially illuminating the security mark with light having different wavelength ranges, it is possible to obtain more precise reflectance values. Advantageously, instead of using spectral filters in front of light sources, light sources such as LED lights having different spectral properties may be used.

In an aspect of the invention, the one or more images are captured by one or more cameras and wherein the reflectance values are established in the cameras.

It may be an advantage to use a camera since the reflection values can be determined based on a portion of the security mark as captured by the camera and it is advantageous to detect the reflection values of the security mark in the camera in that this enables that only these simple values are transferred to a central validation unit, whereby the validation in the central validation unit hereby can happen faster due to faster transmission and processing of the simple values. At the same time, it is ensured that the validation can take place in a separate central validation unit e.g. belonging to a different company, a state institution or other so that the manufacturer of the reverse vending machine or similar equipment is not involved or responsible for the actually validation - which could trigger reimbursement of deposit value.

In an aspect of the invention, the reflection values are detected on the fly as the recyclable container is moved past the one or more security mark detection means. Advantageously, the reflection values may be detected on the fly, i.e. as the container is moved - without stopping or stopping for a short time - past the security mark detection means since the security mark detection means only needs to capture images. Processing of the image for determining the reflection values may be determined during or after the period where images are captured, e.g. between subsequent image captures.

In an aspect of the invention, the one or more images of the recyclable container are captured by one or more cameras comprising picture analysing means arranged to identify the at least a part of the first part and the at least a part of the second part.

It is advantageous provide the cameras with picture analysing means in that the pictures hereby can be analysed in the camera and the total validation time hereby can be reduced in that large and complex image files do not have to be transferred to an external analysing source.

In this context the term *"picture analysing means"* should be understood as any kind of data processer, computer, logic circuit or any other kind of picture analyser suited for analysing a picture to identify different parts of an illustration on the basis of its visual appearance.

### Figures

Embodiments of the invention will be described, by way of example only with reference to the drawings, in which
Fig. 1 shows a validation system,
Fig. 2 shows an embodiment of the validation system comprising a plurality security mark detection means,
Fig. 3 shows an example of a security mark illuminated with light within the visible range,
Fig. 4 shows an example of a security mark illuminated with infrared light having a wavelength up to 900 nm,
Fig. 5 shows an example of a security mark illuminated with infrared light having a wavelength above 900 nm, and
Fig. 6 shows an example of reflectance values obtained from a security mark.

### Description of embodiments

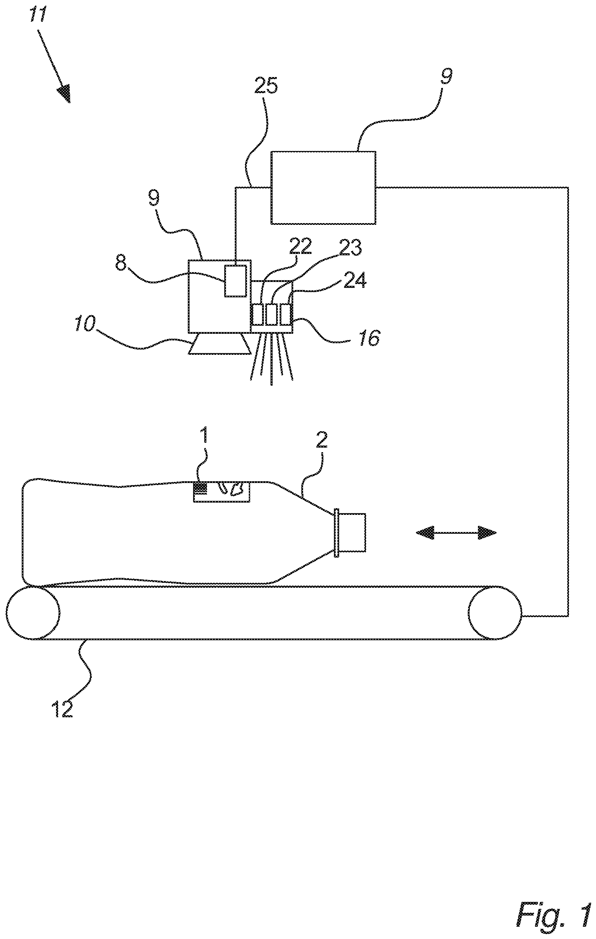

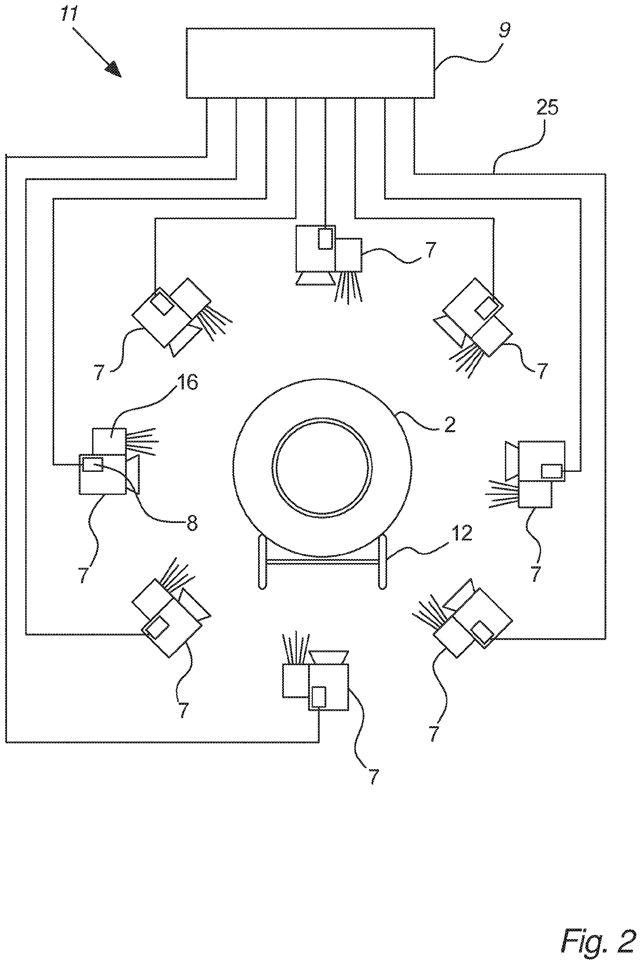

Fig. 1 and 2 shows embodiments of a validation system 11 for validating the authenticity of the security mark 1 of a recyclable container 2. The system 11 comprises conveying means 12 for conveying the container 2 to one or more security mark detection means 7 arranged to detect reflection values R1a, R1b, R2a, R2b, R3a, R3b of at least a part of the security mark 1. The system 11 further comprises a light unit 16 which in this embodiment comprises first, second and third light sources 22, 23, 24 arranged to illuminate the security mark 1 with light within first, second and third 13, 14, 15 spectral ranges, respectively.

The security mark detection means 7 in this context should be interpreted as any kind of detector suited for detecting a security mark, e.g. the graphical appearance, i.e. any device comprising an imaging or non-imaging device including a camera, a light beam scanner, a laser scanner or other optical system capable of capturing reflected light from the security mark or combinations thereof. The device may additionally include light sources for illumination purposes and/or processing circuits for analyzing the captured reflected light.

The security mark detection means 7 may be configured as a combination of a camera 10 (or other imaging device) and picture analysing means 8. The camera 10 may be a digital camera configured with a digital image chip, e.g. CCD or CMOS image chip. The analysing means 8, e.g. a data processor, is arranged to analyse at least a part of the digital image recorded by the image chip, i.e. a digital image of at least a part of the security mark 1.

The conveying means 12 may be any kind of conveying means suited for transporting or guiding containers 2, i.e. any kind of motor-driven or non-driven conveying means 12, e.g. any kind of driven chain, roller or belt conveyors, non-driven roller conveyors, a slide, a tube for guiding a container being moved under action of gravity, or other or combinations thereof.

The light unit 16 may be arranged as individual light devices comprising e.g. LED or laser light sources. The light sources 22, 23, 24 may in another embodiment also or instead be part of the security mark detection means 7 or the light sources 22, 23, 24 may be located elsewhere in the validation system 11 separate from the security mark detection means 7.

The sources 22, 23, 24 may be controllable independent of each other to emit a variable light intensity, e.g. to emit a light intensity from zero to maximum. For example, the first light source 22 may be controlled to emit a maximum intensity, or a fraction of the maximum intensity, and the second and third light sources 23, 24 may, at the same time, be controlled to be turned off. Similarly, the second light source 23 may be controlled to emit a maximum intensity, or a fraction of the maximum intensity, and the first and third light sources 22, 24 may, at the same time, be controlled to be turned off. Thus, the first spectral range 13 may be turned off before the security mark 1 is illuminated with light with the second or third spectral range 14, 15. Accordingly, within a first period of time, the security mark 1 may be illuminated with light within the first spectral range 13, within a second period of time the security mark 1 may be illuminated with light within the second spectral range 14, and within a third period of time the security mark 1 may be illuminated with light within the third spectral range 15. The second period of time may start after the start of the first period of time, e.g. after the end of the first period of time or possibly so that the second period of time starts before the first period of time has ended. The same principles may apply between the second and third periods of time.

It is noted that an embodiment of the invention may utilise only two spectral ranges 13, 14, 15, e.g. the first and third ranges 13, 15, emitted from two different light sources 22, 24, but based the same principles for authorising a security mark 1 as described for other embodiments herein.

The detected reflection values R1a, R1b, R2a, R2b, R3a, R3b may be transferred to a central validation unit 9. The transfer may be performed via transferring means 25, e.g. a wired connection, a wireless connection such as an RF connection, a telecommunication connection, an Internet connection or a combination thereof.

The central validation unit 9 is arranged to check if one or more of the first, second and/or the third reflection values R1a, R1b, R2a, R2b, R3a, R3b are within certain predefined ranges 18, 19, 20 or close to predefined reference reflection values. Alternatively or additionally, the central validation unit 9 may be configured to determine if a combination of two or more of the reflection values R1a, R1b, R2a, R2b, R3a, R3b satisfy certain predefined requirements. As an example, if all or some of the reflection values are within predefined ranges 18, 19, 20, the central validation unit 9 may send a command to the conveying means 12 to move the container 2 to other handling devices, e.g. a container sorting device, a compactor or other. Alternatively or additionally, if all or some of the reflection values R1a, R1b, R2a, R2b, R3a, R3b are within predefined ranges 18, 19, 20, the central validation unit 9 may register a value or deposit corresponding to the authenticated security mark 1 to be returned a user. If some or all reflection values R1a, R1b, R2a, R2b, R3a, R3b are not within predefined ranges 18, 19, 20, the conveying means 12 may be instructed to return the container 2 to the user since the security mark 1 is not recognised as valid.

The central validation unit 9 may be placed locally, e.g. within an enclosure or room which also contains other components of the validation system 11. Alternatively, the central validation unit 9 may be placed externally, possibly remote from the installation of the validation system 11 and possibly connected via the transferring means 25, e.g. in the form of an internet connection and/or a telecommunication connection.

Since an authorised company or organisation may be authorised to handle the assets of the recyclable containers 2, the authorisation of the containers 2 and refunding deposits may need to take place in the central validation unit 9 which is operated and controlled by the authorised company or organisation. Accordingly, the camera 10, the picture analysing means 8 or other may not be suited for, or may not be capable of, carrying out the authorisation process, or at least a part of the authorisation process such as the final decision of validity and refunding. For that reason, it may be necessary to send data obtained from the security mark 1, here reflection data, to the central validation unit 9 for further processing.

The validation system 11 may be configured to adjust an orientation of the container 2 so that one of the one or more security mark detection means 7 are able to capture an image of at least a part of the security mark 1. Alternatively or additionally, the validation system 11 may be configured with one or more security mark detection means 7, e.g. more than two or three security mark detection means 7 arranged around the conveying means 12, e.g. in a circular array, so that at least one of the security mark detection means 7 are able to capture at least a part of the security mark 1 as illustrated in fig. 2.

Furthermore, the validation system 11 may comprise two or more, e.g. three, first light sources 22 arranged around the conveying means 12, e.g. in a circular array, and two or more, e.g. three, second light sources 23 also arranged around the conveying means 12, and optionally, and two or more, e.g. three, third light sources 24 also arranged around the conveying means 12.

The analysing means 8 may be configured as an electronic circuit capable of analysing the digital image. The electronic circuit may comprise a processor arranged to process software program instructions stored in the electronic circuit for performing the analysis.

The analysis performed by the analysing means 8 may include image analysis to identify portions of the security mark 1, e.g. first and second parts 4, 5 or portions thereof. After portions of the security mark 1 has been identified, the light intensity values of one or more pixels of the identified image may be analysed to determine one or more reflection values R1a, R1b, R2a, R2b, R3a, R3b based on light within the first, second and/or third spectral ranges 13, 14, 15 reflected from the first and second parts 4, 5 of the security mark 1.

The light intensity values of at least a part of the security mark 1 may be in the form of grey-scale values. The grey scale values may be obtained by converting intensity values from a colour image sensor to grey-scale values. Alternatively, a grey-scale image sensor may be used in the security mark detection means 7 for capturing images of the security mark 1, so that the grey-scale intensity values are obtained directly from the image sensor. However, the light intensity values could also be in the form of colour intensity values, i.e. an intensity value generated from colour pixels, e.g. pixels of an RGB image chip.

The determination of the reflection values R1a, R1b, R2a, R2b, R3a, R3b may be performed by comparing the light intensity values of one or more pixels of the imaged security mark 1 with intensity values of pixels of an imaged reference portion. The reference portion may be a part of the security mark 1, e.g. an area having a white or bright colour such as the background 17. Alternatively or additionally, the reference portion could include a surface of the validation system 11 which is imaged together with the security mark 1.

Alternatively or additionally, the determination of the reflection values R1a, R1b, R2a, R2b, R3a, R3b may be performed by comparing the light intensity values of one or more pixels of the imaged security mark 1 with an intensity of light emitted by one of the light sources 22, 23, 24. The intensity of emitted light could be determined by measuring the intensity, e.g. by use of a photodiode, or the emitted light could be a predetermined valve of a light intensity stored in a memory of the security mark detection means 7.

By determining the reflection values R1a, R1b, R2a, R2b, R3a, R3b on basis of light intensity values of one or more pixels of the imaged security mark 1 and on basis of intensity values of pixels of an imaged reference portion and/or on basis of an intensity of light emitted by one of the light sources 22, 23, 24, the determined reflection values become independent of variations of the emitted light intensity. By utilising intensity values of pixels of an imaged reference portion, the determined reflection values may be less sensitive to stains and dirt on the security marks 1.

Since the security mark 1 may be illuminated sequentially by the light sources 122, 23, 24 a single detection means 7 may determine both the first, second and third reflection values R1a, R1b, R2a, R2b, R3a, R3b.

The first, second and third spectral ranges 13, 14, 15 may be different. The difference of the spectral ranges may be present in terms of different centre wavelengths of spectral intensity profiles, i.e. the spectral location of peak intensity may be different for the first, second and third light sources 22, 23, 24. The difference of the spectral ranges may also be present in terms of different spectral range locations where the light intensity is above a given minimum threshold. The different spectral ranges may be spectrally overlapping or non-overlapping.

The conveying means 12 may be configured to move the container 2 forward during the period of time when the images are recorded, and the reflection values are determined. Accordingly, the container 2 may be moved between subsequently captured images and subsequently determined reflection values. Similarly, the container 2 may be moved during capturing each of the images.

In order to obtain the reflection values R1a, R1b, R2a, R2b, R3a, R3b on the fly as the recyclable container 2 is moved past the security mark detection means 7, the security mark detection means 7 may be arranged to determine or detect the reflection values in real time, i.e. within a short delay after the security mark 1 has been illuminated with one of the different spectral ranges 13, 14, 15. In this way it is possible to reject a container 2 - if the container is not authenticated - before the container 2 leaves the conveying means 12.

The security mark detection means 7 may be configured to transmit the detected reflection values R1a, R1b, R2a, R2b, R3a, R3b sequentially, i.e. at different times, in order of detection. Accordingly, one or both of the first reflection values R1a, R1b may be sent before the determination of the second R2a, R2b or third R3a, R3b reflection values has been completed. Accordingly, each of the reflection values may be transmitted immediately after the determination of the reflection values has been completed.

Alternatively, the security mark detection means 5 may be configured to transmit all of the detected reflection values R1a, R1b, R2a, R2b, R3a, R3b after the last detected reflection value of a security mark 1 of a given container 2. Accordingly, the security mark detection means 7 may comprise a memory for storing reflection values as they are successively determined. The plurality of detected reflection values may be transmitted in succession after the last reflection value has been determined or they may be transmitted as a single data package.

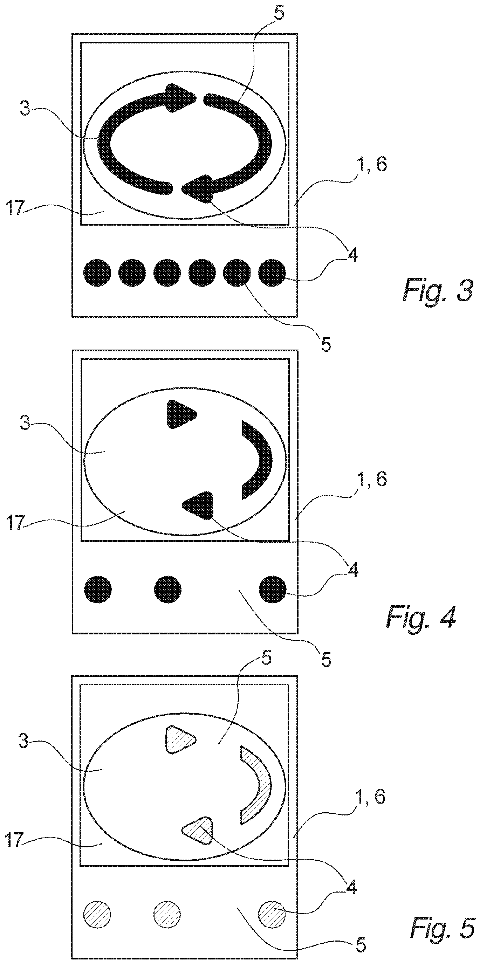

Fig. 3, fig. 4 and fig 5 shows a security mark 1 of a recyclable container according to this invention under different lighting conditions.

The figures illustrate the reflection images obtained by recording images of the security mark 1 when sequentially illuminated with light within a first, second and third spectral ranges 13, 14, 15.

In the first reflection image - illustrated in fig. 3 - obtained by illuminating the security mark 1 with the first spectral range 13, both the first and second parts 4, 5 are fully visible and may have a dark or black appearance compared to the bright background 17 due to the reflection values between 0 and 20 percent.

In the second reflection image - illustrated in fig. 4 - obtained by illuminating the security mark 1 with the second spectral range 14, only the second part 5 is fully visible due to the low reflection values between 0 and 20 percent of the ink used for the second part 5. In comparison, within the second spectral range 14, the ink used for the first part 4 has a high reflection value above 80 percent so that the first part 4 appears substantially invisible in an image, e.g. grey-scale image, due to the corresponding high reflection values of the background 17.

In the third reflection image - illustrated in fig. 5 - obtained by illuminating the security mark 1 with the third spectral range 15, the second part 5 has an appearance between substantially invisible and fully visible, i.e. not fully visible, due to the reflection value of the ink which is above 25 percent and below e.g. 100, 90, 80 percent or even lower. The first part 4 appears substantially invisible in the third reflection image similarly to the case in the second reflection image.

In this embodiment, the security mark 1 is formed as a label 6 arranged to be connected to the recyclable container 2, such as a recyclable bottle, by means of an adhesive on the backside of the label 6 or by being part of a larger label e.g. being heat-shrunk onto the container 2. Alternatively, the security mark 2 may be provided directly on the recyclable container 2, as a security mark 1 printed on the recyclable container 2 or as a security mark 2 printed on a support and connected to the recyclable container 2.

The security mark 1 comprises an illustration 3 including a first part 4 printed in a first ink (illustrated as the pats that are visible in fig. 3 but invisible in fig. 4 and 5) and second part 5 printed in a second ink (illustrated as the visible parts in figs. 4 and 5). The illustration 3 is surrounded by a background 17 which advantageously may have an appearance or colour being different than the colour and/or appearance of the first and second parts 4, 5.

The reflectance of the first part 4 may be between 0 and 20 percent in the visible spectrum having a wavelength up to e.g. 660 nm. For example, if the background 17 is white or has a bright colour in the visible and/or the infrared spectra, the low reflectance of the first part 4 in the visible spectrum implies a dark or black appearance of the first part 4. Accordingly, the first part 4 is substantially fully visible in most of the visible spectrum.

The reflectance of the first part 4 may be above e.g. 80 percent in infrared light having a wavelength above e.g. 800 nm. When the background 17 has a bright colour in the visible and/or the infrared spectra, the high reflectance of the first part 4 in the infrared spectrum implies a bright or white appearance of the first part 4 when the first part 4 is imaged by an infrared sensitive camera. Accordingly, the first part 4 is substantially invisible in most of the infrared spectrum, i.e. in the sense that the colour and intensity differences between the background 17 and the first part 4 are small in an image recorded in infrared light by an infrared sensitive camera.

The reflectance of the second part 5 may be between e.g. 0 and 20 percent in light having a wavelength up to e.g. 800 nm. Accordingly, due to the low reflectance of the second part 5 and the high reflectance of the background 17, the second part 5 becomes substantially fully visible in the entire visible spectrum and in a first part of the infrared spectrum up to e.g. 800 nm. The reflectance of the second part 5 is above 25 percent in a second part of the infrared light having a wavelength above e.g. 960 nm. Accordingly, in the second part of the infrared spectrum the second part 5 is at least not fully visible, i.e. in a grey-scale colour range the second part 5 may appear grey in a grey-scale image recorded in infrared light above 960 nm by an infrared sensitive camera.

The reflectance or reflection value is generally defined by the fraction of a quantity of incident light within a given spectrum which is reflected, e.g. as the fraction of incident electromagnetic power within a spectrum which is reflected.

The visible spectrum may refer to wavelengths up to e.g. 700 nm, 680 nm or 660 nm and starting e.g. from 390 nm. The infrared spectrum may refer to wavelengths above e.g. 700 nm, 750 nm or 800 nm and up to e.g. 1400 nm.

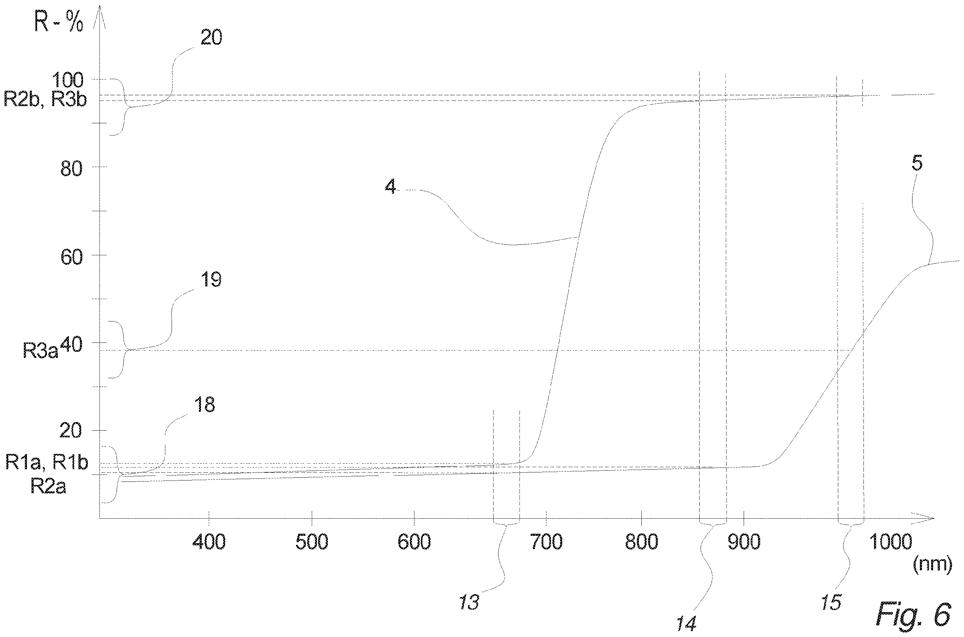

Fig. 6 shows an example of reflectance values obtained from a security mark 1 of the recyclable container according to this invention. . The figure shows an example of detected reflectance values R of the first ink - i.e. the first part 4 - and second ink - i.e. the second part 5 - in relation to the wavelength λ of the illumination light in units of nm.

One or both of the wavelength-dependent inks may have a profile in terms of the reflectance dependency of the wavelength which is unique, i.e. which is not present in other available inks.

Accordingly, by detecting two or more reflectance values R1a, R1b, R2a, R2b, R3a, R3b of the first and second parts 4, 5 of the security mark 1 and by comparing the detected reflectance values R1a, R1b, R2a, R2b, R3a, R3b with predefined reference ranges 18, 19, 20 or values it is possible to determine if the security mark 1 has been printed with the valid inks or if the security mark 1 has been printed with non-valid inks and, thereby, tampered.

Fig. 6 further illustrates a method for determining reflectance values R1a, R1b, R2a, R2b, R3a, R3b of the first and second parts 4, 5 when illuminated with visible light within a first range 13, e.g. a part of the visible spectrum, with infrared light within a second range 14, e.g. with wavelengths up to 900 nm, and with infrared light within a third range 15, e.g. with wavelengths above 900 nm such as above 960 nm.

It is understood that any single reflectance value of the reflectance values R1a, R1b, R2a, R2b, R3a, R3b may be obtained from only a portion of the first or second parts 4, 5 or substantially the whole first or second parts 4, 5.

The first reflectance values R1a, R1b of the respective first and second parts 4, 5 are obtained by measuring an amount, e.g. power, of light reflected from at least a portion of the first or second parts 4, 5 when the security mark 1 is illuminated with visible light within the first range 13. The first spectral range 13 may in another embodiment also or instead be located differently in the visible range or it many comprise the entire visible range.

The second reflectance values R2a, R2b of the respective first and second parts 4, 5 are similarly obtained by measuring reflected light from at least a portion of the first or second parts 4, 5 when the security mark 1 is illuminated with infrared light within the second range 14. The second spectral range 14 may in another embodiment also or instead be located differently in the infrared subrange below 900 nm or it many comprise the entire infrared subrange below 900 nm.

The third reflectance values R3a, R3b of the respective first and second parts 4, 5 are similarly obtained by measuring reflected light from at least a portion of the first or second parts 4, 5 when the security mark 1 is illuminated with infrared light within the third range 15. The third spectral range 15 may in another embodiment also or instead be located differently in the infrared subrange above 900 nm or it many comprise the entire infrared subrange above 900 nm.

Fig. 6 show examples of the reflection values R1a, R1b, R2a, R2b, R3a, R3b. The reflection values may be significantly different; however, in some situations some of the reflection values may be almost the same.

The first reflectance values R1a, R1b, the second reflectance values R2a, R2b and the third reflectance values R3a, R3b may have been detected by sequentially illuminating the security mark 1 with light within the first, second and third wavelength ranges 13, 14, 15, respectively, according to the methods described above.

The authenticity of the security mark 1 can be verified by checking if the first, second and third reflection values R1a, R1b, R2a, R2b, R3a, R3b are within predefined ranges 18, 19, 20, alternatively close to predefined values. Accordingly, up to six different predefined ranges 18, 19, 20 or predefined values may be provided for comparing with the reflection values R1a, R1b, R2a, R2b, R3a, R3b. Fig. 6 shows three different ranges 18, 19, 20; however, six different ranges 18, 19, 20 could be provided for the respective six different reflection values R1a, R1b, R2a, R2b, R3a, R3b.

Alternatively or additionally, the authenticity of the security mark 1 may be verified by comparing one or more of the detected reflectance values R1a, R1b, R2a, R2b, R3a, R3b with other one or more detected reflectance values R1a, R1b, R2a, R2b, R3a, R3b, e.g. by comparing the one of the first reflectance values R1a, R1b with one of the second reflectance values R2a, R2b.

The detected reflectance values R1a, R1b, R2a, R2b, R3a, R3b of a valid security mark 1, may deviate from corresponding reflectance values of the spectral reflectance profiles, e.g. due to variations in the spectral amplitude profiles of different light sources used for illuminating the security mark 1 with the different spectral ranges 13, 14, 15. However, since at least one of the spectral reflectance profiles are unique the combination of at least some of the reflectance values R1a, R1b, R2a, R2b, R3a, R3b are also unique and may therefore be used for validating a security mark 1. In an embodiment, due to the possible variations in detected reflectance values R1a, R1b, R2a, R2b, R3a, R3b, the predefined reference ranges 18, 19, 20 or predefined values for comparing with the detected reflectance values R1a, R1b, R2a, R2b, R3a, R3b may be determined from reflection detections of a reference ink, e.g. a reference security mark. Alternatively, the predefined reference ranges 18, 19, 20 or predefined values may be determined from the reflectance values of the spectral reflectance profile of the two inks.

### References

- 1.: Security mark
- 2.: Recyclable container
- 3.: Illustration
- 4.: First part
- 5.: Second part
- 6.: Label
- 7.: Security mark detection means
- 8.: Picture analysing means
- 9.: Central validation unit
- 10.: Camera
- 11.: Validation system
- 12.: Conveying means
- 13.: First wavelength range
- 14.: Second wavelength range
- 15.: Third wavelength range
- 16.: Light unit
- 17.: Background
- 18.: First reference range
- 19.: Second reference range
- 20.: Third reference range
- 21. 22.: First light source
- 23.: Second light source
- 24.: Third light source
- 25.: Transferring means
- R1a.: First reflectance value of first part
- R1b.: First reflectance value of second part
- R2a.: Second reflectance value of first part
- R2b.: Second reflectance value of second part
- R3a.: Third reflectance value of first part
- R3b.: Third reflectance value of second part

## Claims

1. A recyclable container (2) including a security mark (1), said security mark (1) comprising
an illustration (3) including a first part (4) printed in a first ink and second part (5) printed in a second ink,
wherein the reflectance of said first part (4) is between 0 and 20 percent in the visible spectrum having a wavelength up to 660 nm, making said first part (4) substantially visible in the visible spectrum having a wavelength up to 660 nm, wherein the reflectance of said first part (4) is above 80 percent in infrared light having a wavelength above 800 nm making the first part (4) substantially invisible in infrared light having a wavelength above 800 nm,
wherein the reflectance of said second part (5) is between 0 and 20 percent in light having a wavelength up to 800 nm making said second part (5) substantially visible in the visible spectrum and a first part (4) of the infrared spectrum up to 800 nm, wherein the reflectance of said second part (5) is above 25 percent in infrared light having a wavelength above 960 nm making the second part (5) visible in infrared light having a wavelength above 960 nm.

2. A recyclable container (2) according to claim 1, wherein said security mark (1) is formed on a label (6) attached to said recyclable container (2).

3. A recyclable container (2) according to claim 1, wherein said security mark (1) is printed directly on said recyclable container (2).

4. A recyclable container (2) according to any of the preceding claims, wherein said reflectance of said second part (5) is between 0 and 20 percent in light having a wavelength up to 880 nm.

5. A recyclable container (2) according to any of the preceding claims, wherein said reflectance of said second part (5) is above 35 percent in light having a wavelength above 940 nm.

6. A recyclable container (2) according to any of the preceding claims, wherein said reflectance of said second part (5) is below 80 percent in infrared light, making said second part (5) at least partly visible in the infrared spectrum.

7. A method for validating the authenticity of a recyclable container (2), according to any of the preceding claims, the recyclable container including a security mark (1), said method comprising the steps of:
• capturing one or more images of said recyclable container (2),
• analysing said one or more images to identify at least a part of said first part (4) of said security mark (1) and at least a part of said second part (5) of said security mark (1),
• illuminating said security mark (1) with light within the visible spectrum,
• detecting first reflectance values (R1a, R1b) of said at least a part of said first part (4) and said at least a part of said second part (5) when said security mark (1) is illuminated with light within said visible range,
• illuminating said security mark (1) with infrared light having a wavelength up to 900 nm,
• detecting second reflectance values (R2a, R2b) of said at least a part of said first part (4) and said at least a part of said second part (5) when said security mark (1) is illuminated with infrared light having a wavelength up to 900 nm,
• illuminating said security mark (1) with infrared light having a wavelength above 900 nm,
• detecting third reflectance values (R3a, R3b) of said at least a part of said first part (4) and said at least a part of said second part (5) when said security mark (1) is illuminated with infrared light having a wavelength above 900 nm,
• validating the authenticity of said security mark (1) by checking if said first reflectance values (R1a, R1b), said second reflectance values (R2a, R2b) and said third reflectance values (R3a, R3b) are within predefined ranges (18, 19, 20).

8. A method according to claim 7, wherein said reflectance values are established by detecting a grey-scale value.

9. A method according to claim 7 or 8, wherein said one or more images of said recyclable container (2) is taken by one or more security mark detection means (7) while said recyclable container (2) is moved past said one or more security mark detection means (7).

10. A method according to any of claims 7 to 9, wherein said infrared light having a wavelength up to 900 nm and said infrared light having a wavelength above 900 nm are turned off while said first reflectance values are detected, wherein said light within the visible spectrum and said infrared light having a wavelength above 900 nm are turned off while said second reflectance values are detected, and wherein said light within said visible spectrum and said infrared light having a wavelength up to 900 nm are turned off while said third reflectance values are detected.

11. A method according to any of the preceding claims, wherein said one or more images are captured by one or more cameras (10) and wherein said reflectance values are established in said cameras (10).

12. A method according to any of claims 7 to 11, wherein said reflection values are detected on the fly as said recyclable container (2) is moved past said one or more security mark detection means (7).

13. A method according to any of claims 7 to 12, wherein said one or more images of said recyclable container (2) are captured by one or more cameras (10) comprising picture analysing means (8) arranged to identify said at least a part of said first part (4) and said at least a part of said second part (5).

## Patentansprüche

1. Wiederverwertbarer Behälter (2), der eine Sicherheitsmarkierung (1) beinhaltet, wobei die Sicherheitsmarkierung (1) Folgendes umfasst:
eine Illustration (3), die einen ersten Teil (4), der mit einer ersten Tinte gedruckt ist, und einen zweiten Teil (5) beinhaltet, der mit einer zweiten Tinte gedruckt ist,
wobei das Reflexionsvermögen des ersten Teils (4) zwischen 0 und 20 Prozent in dem sichtbaren Spektrum mit einer Wellenlänge bis zu 660 nm ist, wodurch der erste Teil (4) in dem sichtbaren Spektrum mit einer Wellenlänge bis zu 660 nm im Wesentlichen sichtbar gemacht wird, wobei das Reflexionsvermögen des ersten Teils (4) über 80 Prozent in Infrarotlicht mit einer Wellenlänge über 800 nm ist, wodurch der erste Teil (4) in Infrarotlicht mit einer Wellenlänge über 800 nm im Wesentlichen unsichtbar gemacht wird,
wobei das Reflexionsvermögen des zweiten Teils (5) zwischen 0 und 20 Prozent in Licht mit einer Wellenlänge bis zu 800 nm ist, wodurch der zweite Teil (5) in dem sichtbaren Spektrum und einem ersten Teil (4) des Infrarotspektrums bis zu 800 nm im Wesentlichen sichtbar gemacht wird, wobei das Reflexionsvermögen des zweiten Teils (5) über 25 Prozent in Infrarotlicht mit einer Wellenlänge über 960 nm ist, wodurch der zweite Teil (5) in Infrarotlicht mit einer Wellenlänge über 960 nm sichtbar gemacht wird.

2. Wiederverwertbarer Behälter (2) nach Anspruch 1, wobei die Sicherheitsmarkierung (1) auf einem Etikett (6) gebildet ist, das an dem wiederverwertbaren Behälter (2) angebracht ist.

3. Wiederverwertbarer Behälter (2) nach Anspruch 1, wobei die Sicherheitsmarkierung (1) direkt auf den wiederverwertbaren Behälter (2) gedruckt ist.

4. Wiederverwertbarer Behälter (2) nach einem der vorhergehenden Ansprüche, wobei das Reflexionsvermögen des zweiten Teils (5) zwischen 0 und 20 Prozent in Licht mit einer Wellenlänge bis zu 880 nm ist.

5. Wiederverwertbarer Behälter (2) nach einem der vorhergehenden Ansprüche, wobei das Reflexionsvermögen des zweiten Teils (5) über 35 Prozent in Licht mit einer Wellenlänge über 940 nm ist.

6. Wiederverwertbarer Behälter (2) nach einem der vorhergehenden Ansprüche, wobei das Reflexionsvermögen des zweiten Teils (5) unter 80 Prozent in Infrarotlicht ist, wodurch der zweite Teil (5) in dem Infrarotspektrum zumindest teilweise sichtbar gemacht wird.

7. Verfahren zum Validieren der Authentizität eines wiederverwertbaren Behälters (2) nach einem der vorhergehenden Ansprüche, wobei der wiederverwertbare Behälter eine Sicherheitsmarkierung (1) beinhaltet, wobei das Verfahren folgende Schritte umfasst:
• Aufnehmen von einem oder mehreren Bildern des wiederverwertbaren Behälters (2),
• Analysieren des einen oder der mehreren Bilder, um zumindest einen Teil des ersten Teils (4) der Sicherheitsmarkierung (1) und zumindest einen Teil des zweiten Teils (5) der Sicherheitsmarkierung (1) zu identifizieren,
• Beleuchten der Sicherheitsmarkierung (1) mit Licht innerhalb des sichtbaren Spektrums,
• Erfassen von ersten Reflexionswerten (R1a, R1b) des zumindest einen Teils des ersten Teils (4) und des zumindest einen Teils des zweiten Teils (5), wenn die Sicherheitsmarkierung (1) mit Licht innerhalb des sichtbaren Bereichs beleuchtet wird,
• Beleuchten der Sicherheitsmarkierung (1) mit Infrarotlicht mit einer Wellenlänge bis zu 900 nm,
• Erfassen von zweiten Reflexionswerten (R2a, R2b) des zumindest einen Teils des ersten Teils (4) und des zumindest einen Teils des zweiten Teils (5), wenn die Sicherheitsmarkierung (1) mit Infrarotlicht mit einer Wellenlänge bis zu 900 nm beleuchtet wird,
• Beleuchten der Sicherheitsmarkierung (1) mit Infrarotlicht mit einer Wellenlänge über 900 nm,
• Erfassen von dritten Reflexionswerten (R3a, R3b) des zumindest einen Teils des ersten Teils (4) und des zumindest einen Teils des zweiten Teils (5), wenn die Sicherheitsmarkierung (1) mit Infrarotlicht mit einer Wellenlänge über 900 nm beleuchtet wird,
• Validieren der Echtheit der Sicherheitsmarkierung (1) durch Prüfen, ob die ersten Reflexionswerte (R1a, R1b), die zweiten Reflexionswerte (R2a, R2b) und die dritten Reflexionswerte (R3a, R3b) innerhalb vordefinierter Bereiche (18, 19, 20) sind.

8. Verfahren nach Anspruch 7, wobei die Reflexionswerte durch Erfassen eines Graustufenwertes ermittelt werden.

9. Verfahren nach Anspruch 7 oder 8, wobei das eine oder die mehreren Bilder des wiederverwertbaren Behälters (2) durch ein oder mehrere Sicherheitsmarkierungserfassungsmittel (7) aufgenommen werden, während der wiederverwertbare Behälter (2) an dem einen oder den mehreren Sicherheitsmarkierungserfassungsmitteln (7) vorbeibewegt wird.

10. Verfahren nach einem der Ansprüche 7 bis 9, wobei das Infrarotlicht mit einer Wellenlänge bis zu 900 nm und das Infrarotlicht mit einer Wellenlänge über 900 nm ausgeschaltet werden, während die ersten Reflexionswerte erfasst werden, wobei das Licht innerhalb des sichtbaren Spektrums und das Infrarotlicht mit einer Wellenlänge über 900 nm ausgeschaltet werden, während die zweiten Reflexionswerte erfasst werden, und wobei das Licht innerhalb des sichtbaren Spektrums und das Infrarotlicht mit einer Wellenlänge bis zu 900 nm ausgeschaltet werden, während die dritten Reflexionswerte erfasst werden.

11. Verfahren nach einem der vorhergehenden Ansprüche, wobei das eine oder die mehreren Bilder durch eine oder mehrere Kameras (10) aufgenommen werden und wobei die Reflexionswerte in den Kameras (10) ermittelt werden.

12. Verfahren nach einem der Ansprüche 7 bis 11, wobei die Reflexionswerte mitlaufend erfasst werden, während der wiederverwertbare Behälter (2) an dem einen oder mehreren Sicherheitsmarkierungserfassungsmitteln (7) vorbeibewegt wird.

13. Verfahren nach einem der Ansprüche 7 bis 12, wobei das eine oder die mehreren Bilder des wiederverwertbaren Behälters (2) durch eine oder mehrere Kameras (10) aufgenommen werden, die Bildanalysemittel (8) umfassen, die angeordnet sind, um den zumindest einen Teil des ersten Teils (4) und den zumindest einen Teil des zweiten Teils (5) zu identifizieren.

## Revendications

1. Récipient recyclable (2) comprenant une marque de sécurité (1), ladite marque de sécurité (1) comprenant
une illustration (3) comprenant une première partie (4) imprimée dans une première encre et une seconde partie (5) imprimée dans une seconde encre,
ledit facteur de réflexion de ladite première partie (4) étant compris entre 0 et 20 pour cent dans le spectre visible possédant une longueur d'onde allant jusqu'à 660 nm, rendant ladite première partie (4) sensiblement visible dans le spectre visible possédant une longueur d'onde allant jusqu'à 660 nm, ledit facteur de réflexion de ladite première partie (4) étant supérieur à 80 pour cent dans la lumière infrarouge possédant une longueur d'onde supérieure à 800 nm, rendant la première partie (4) sensiblement invisible dans la lumière infrarouge possédant une longueur d'onde supérieure à 800 nm,
ledit facteur de réflexion de ladite seconde partie (5) étant compris entre 0 et 20 pour cent dans la lumière possédant une longueur d'onde allant jusqu'à 800 nm rendant ladite seconde partie (5) sensiblement visible dans le spectre visible et une première partie (4) du spectre infrarouge allant jusqu'à 800 nm, ledit facteur de réflexion de ladite seconde partie (5) étant supérieur à 25 pour cent dans la lumière infrarouge possédant une longueur d'onde supérieure à 960 nm rendant la seconde partie (5) visible dans la lumière infrarouge possédant une longueur d'onde supérieure à 960 nm.

2. Récipient recyclable (2) selon la revendication 1, ladite marque de sécurité (1) étant formée sur une étiquette (6) fixée audit récipient recyclable (2).

3. Récipient recyclable (2) selon la revendication 1, ladite marque de sécurité (1) étant imprimée directement sur ledit récipient recyclable (2).

4. Récipient recyclable (2) selon l'une quelconque des revendications précédentes, ledit facteur de réflexion de ladite seconde partie (5) étant compris entre 0 et 20 pour cent dans la lumière possédant une longueur d'onde allant jusqu'à 880 nm.

5. Récipient recyclable (2) selon l'une quelconque des revendications précédentes, ledit facteur de réflexion de ladite seconde partie (5) étant supérieur à 35 pour cent dans la lumière possédant une longueur d'onde supérieure à 940 nm.

6. Récipient recyclable (2) selon l'une quelconque des revendications précédentes, ledit facteur de réflexion de ladite seconde partie (5) étant inférieur à 80 pour cent dans la lumière infrarouge, rendant ladite seconde partie (5) au moins partiellement visible dans le spectre infrarouge.

7. Procédé permettant la validation de l'authenticité d'un récipient recyclable (2), selon l'une quelconque des revendications précédentes, le récipient recyclable comprenant une marque de sécurité (1),
ledit procédé comprenant les étapes de :
• capture d'une ou plusieurs images dudit récipient recyclable (2),
• analyse de ladite ou desdites images pour identifier au moins une partie de ladite première partie (4) de ladite marque de sécurité (1) et au moins une partie de ladite seconde partie (5) de ladite marque de sécurité (1),
• éclairage de ladite marque de sécurité (1) avec de la lumière dans le spectre visible,
• détection des premières valeurs de facteur de réflexion (R1a, R1b) de ladite au moins une partie de ladite première partie (4) et de ladite au moins une partie de ladite seconde partie (5) lorsque ladite marque de sécurité (1) est éclairée par une lumière dans ladite plage visible,
• éclairage de ladite marque de sécurité (1) avec une lumière infrarouge possédant une longueur d'onde allant jusqu'à 900 nm,
• détection des deuxièmes valeurs de facteur de réflexion (R2a, R2b) de ladite au moins une partie de ladite première partie (4) et de ladite au moins une partie de ladite seconde partie (5) lorsque ladite marque de sécurité (1) est éclairée avec une lumière infrarouge possédant une longueur d'onde allant jusqu'à 900 nm,
• éclairage de ladite marque de sécurité (1) avec une lumière infrarouge possédant une longueur d'onde supérieure à 900 nm,
• détection des troisièmes valeurs de facteur de réflexion (R3a, R3b) de ladite au moins une partie de ladite première partie (4) et de ladite au moins une partie de ladite seconde partie (5) lorsque ladite marque de sécurité (1) est éclairée avec une lumière infrarouge possédant une longueur d'onde au-dessus de 900 nm,
• validation de l'authenticité de ladite marque de sécurité (1) en vérifiant si lesdites premières valeurs de facteur de réflexion (R1a, R1b), lesdites deuxièmes valeurs de facteur de réflexion (R2a, R2b) et lesdites troisièmes valeurs de facteur de réflexion (R3a, R3b) sont dans les limites des plages prédéfinies (18, 19, 20).

8. Procédé selon la revendication 7, lesdites valeurs de facteur de réflexion étant établies en détectant une valeur d'échelle de gris.

9. Procédé selon la revendication 7 ou 8, ladite ou lesdites images dudit récipient recyclable (2) étant prises par un ou plusieurs moyens de détection de marque de sécurité (7) pendant que ledit récipient recyclable (2) est déplacé devant ledit ou lesdits moyens de détection de marque de sécurité (7).

10. Procédé selon l'une quelconque des revendications 7 à 9, ladite lumière infrarouge possédant une longueur d'onde allant jusqu'à 900 nm et ladite lumière infrarouge possédant une longueur d'onde supérieure à 900 nm étant désactivées pendant que lesdites premières valeurs de facteur de réflexion sont détectées, ladite lumière dans le spectre visible et ladite lumière infrarouge possédant une longueur d'onde supérieure à 900 nm étant désactivées pendant que lesdites deuxièmes valeurs de facteur de réflexion sont détectées, et ladite lumière dans ledit spectre visible et ladite lumière infrarouge possédant une longueur d'onde allant jusqu'à 900 nm étant désactivées pendant que lesdites troisièmes valeurs de facteur de réflexion sont détectées.

11. Procédé selon l'une quelconque des revendications précédentes, ladite ou lesdites images étant capturées par une ou plusieurs caméras (10) et lesdites valeurs de facteur de réflexion étant établies dans lesdites caméras (10).

12. Procédé selon l'une quelconque des revendications 7 à 11, lesdites valeurs de réflexion étant détectées à la volée tandis que ledit récipient recyclable (2) est déplacé devant ledit ou lesdits moyens de détection de marque de sécurité (7).

13. Procédé selon l'une quelconque des revendications 7 à 12, ladite ou lesdites images dudit récipient recyclable (2) étant capturées par une ou plusieurs caméras (10) comprenant des moyens d'analyse d'image (8) agencés pour identifier ladite au moins une partie de ladite première partie (4) et ladite au moins une partie de ladite seconde partie (5).
